# EUROPEAN PATENT APPLICATION

(11) **EP 3 279 516 A1**
(43) Date of publication of application: **07.02.2018**
(21) Application number: 16200713.2
(22) Date of filing: 25.11.2016
(51) Int. Cl.: F16H 57/04, E21C 31/02

(54) **COOLING CIRCUIT FOR CUTTING DRUM GEARBOX**

(30) Priority: 05.08.2016 US 201715229647
(71) Applicant: Caterpillar Global Mining Europe GmbH, 44534 Lünen (DE)
(72) Inventor: Marek, Rainer, 44534 Lünen (DE); Voss, Dirk, 44534 Lünen (DE); Wellenkamp, Lutz, 44534 Lünen (DE); Berger, Stefan, 44649 Herne (DE); Kortmann, Oliver, 59368 Werne (DE); Butz, Carsten, 44534 Lünen (DE); Somers, Trevor, Shorewood, IL 60404 (US); Gerges, Ray, New Lenox, IL 60451 (US)
(74) Representative: Kramer Barske Schmidtchen Patentanwälte PartG mbB

(57) **Abstract**

A transmission assembly (100) for a mobile mining machine (10) is disclosed. A gearbox (40) includes a lubricant inlet (40C), a first lubricant outlet (40A), and a second lubricant outlet (40B) provided spaced apart from the first lubricant outlet (40A). A cooling circuit (102) fluidly connects the first lubricant outlet (40A) and the second lubricant outlet (40B) to the lubricant inlet (40C). The cooling circuit (102; 202) is configured to selectively pump lubricant from the first and second lubricant outlets (40A 40B) to the lubricant inlet (40C) through the cooling circuit (102). The assembly allows to pump lubricant only from that lubricant outlet, which is immersed in lubricant.

## Description

### Technical Field

The present disclosure relates to a transmission assembly including a gearbox for a cutting drum, and a cooling circuit connected to the gearbox. In a related aspect, the present disclosure relates to a method for cooling a gearbox for a cutting drum.

### Background

Mobile mining machines, for example rock headers, are used to excavate mineral deposits, for example, hard rock seams present in the earth. These mobile mining machines may be provided with a gearbox including a gear set which transmits a drive force from a drive unit to the cutting drum to rotate the same.

As the cutting drum may be subject to extreme operating conditions, the gearbox may also experience increased heat during operation. Typically, the gearbox contains a lubricant for lubricating the gears and for cooling the gears. A cooling circuit may be connected to the gearbox for pumping lubricant from the gearbox, cooling the lubricant, and returning the lubricant to the gearbox.

An example of a mobile mining machine is disclosed in WO 2014/026761 A2 of Caterpillar Global Mining Europe GmbH.

The present disclosure is directed, at least in part, to improving or overcoming one or more aspects of prior systems.

### Summary of the Disclosure

In one aspect, a transmission assembly for a mobile mining machine including a cutting drum is disclosed. The transmission assembly comprises a gearbox for connecting to the cutting drum. The gearbox including a lubricant inlet, a first lubricant outlet, and a second lubricant outlet provided spaced apart from the first lubricant outlet. A cooling circuit fluidly connects the first lubricant outlet and the second lubricant outlet to the lubricant inlet. The cooling circuit is configured to selectively pump lubricant from the first lubricant outlet to the lubricant inlet through the cooling circuit. The cooling circuit is further configured to selectively pump lubricant from the second lubricant outlet to the lubricant inlet through the cooling circuit.

In another aspect, a mobile mining machine for underground mining is disclosed. The mobile mining machine includes a cutting drum, and a transmission assembly as disclosed herein. The transmission assembly is operatively coupled to the cutting drum.

In yet another aspect, a method for cooling a gearbox for a cutting drum of a mining machine is disclosed. The method comprises providing a first lubricant outlet and a second lubricant outlet at the gearbox. The second lubricant outlet is spaced apart from the first lubricant outlet. The method further comprises determining which of the first lubricant outlet and the second lubricant outlet has a lower height above a ground below the mining machine. The method further comprises pumping lubricant through a cooling circuit only from that lubricant outlet of the first lubricant outlet and the second lubricant outlet, which has the lower height above the ground.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a side view of an exemplary mobile mining machine according to the present disclosure;
Fig. 2 shows a top view of the exemplary mobile mining machine of Fig. 1;
Fig. 3 shows a schematic drawing of an exemplary gearbox according to the present disclosure;
Fig. 4 shows a first embodiment of a transmission assembly according to the present disclosure;
Fig. 5 shows a second embodiment of a transmission assembly according to the present disclosure;
Figs. 6A to 7B show a cantilever unit of the mobile mining machine during different operation states.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that aeration of a cooling circuit connected to a gearbox of a cutting drum of a mining machine may result from air entering the cooling circuit when a lubricant outlet of the gearbox is not immersed in lubricant. This situation occurs when said lubricant outlet is positioned above the lubricant level of the gearbox, for example, as a result from a change in orientation and position of the gearbox during operation. Specifically, the gearbox may be included in a front support arm part of a cantilever unit supporting the cutting drum. The front support arm part may be tiltable upwards and downwards, and may be rotatable about a longitudinal axis of the cantilever unit.

Accordingly, herein it is suggested to provide a gearbox with at least two lubricant outlets being spaced apart from each other so that at least one of the lubricant outlets is immersed in lubricant irrespective of the operating condition of the mobile mining machine given that a lubricant level in the gearbox does not fall below a lower threshold. A cooling circuit is configured to selectively pump lubricant (only) from a first lubricant outlet through the cooling circuit, and to selectively pump lubricant (only) from a second lubricant outlet through the cooling circuit. This allows to pump lubricant only from the lubricant outlet, which is immersed in lubricant. Aeration can be effectively prevented.

Wherever possible, the same reference numbers will be used throughout the drawings to refer to the same or the like parts.

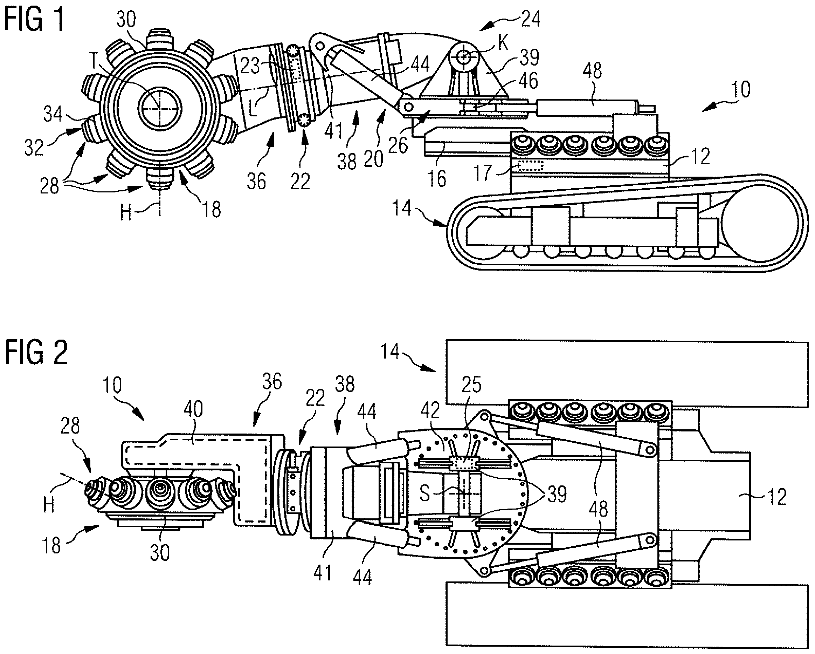

In Figs. 1 and 2, a mobile mining machine according to the present disclosure is marked overall by reference numeral 10

The mobile mining machine 10 comprises a machine base frame 12, a drive chassis 14, a slide carriage unit 16, a cutting drum 18, a cantilever unit 20, a rotary mechanism 22, a tilt device 24, and a pivotal device 26.

The machine base frame 12 is movable by means of the drive chassis 14, for example a caterpillar tractor. In Figs. 1 and 2, the machine base frame 12 is only illustrated diagrammatically for symbolization of a mobile mining machine 10 and may be of any shape, and may be provided with diverse driving devices. In some embodiments, the machine base frame 12 may include further components, for example a conveyor belt for transporting the excavated material, a driver cab etc. The machine base frame 12 may include an orientation sensor 17 to output information regarding an orientation of the mobile mining machine 10.

In the shown embodiment, the slide carriage unit 16 is guided longitudinally displaceable on the machine base frame 12 in a forwards and backwards direction of the mobile mining machine 10. The cutting drum 18 is displaceable in a longitudinal direction of the mobile mining machine 10 via a movement of the slide carriage unit 16, also without movement of the drive chassis 14, forwards or backwards until the displacement path of the slide carriage unit 16 is exhausted.

The cutting drum 18 is connected to the slide carriage unit 16 via the cantilever unit 20. In the illustrated embodiment, the cantilever unit 20 is supported via the slide carriage unit 16 on the machine base frame 12. The cutting drum 18 is rotatable about a drum axis T. The cutting drum 18 has excavating tools marked overall with reference numeral 28. The excavating (cutting) tools 28 are arranged angularly off-set relative to one another on the drum periphery of a drum housing 30 of the cutting drum 18. The excavating tools 28 comprise a drivable and rotatable tool holder 32 with a support head 34 located outside of the drum housing 30. The tool holders 32 can be driven to rotate about respective tool holder axes H (one of which is exemplary indicated in Figs. 1 and 2). Each support head 34 may hold, for example, a plurality of cutting bits or chisels.

The cutting drum 18 is mounted on one side on a support arm part 36 of the cantilever unit 20. The support arm part 36 supports the cutting drum 18 on one side face (bottom side face) of the cutting drum 18 only. The cantilever unit 20 further includes the rotary mechanism 22 and a base part 38. The rotary mechanism 22 is mounted between the support arm part 36 and the base part 38. The rotary mechanism 22 is configured to rotate the support arm part 36, and thus also the cutting drum 18 and the cutting drum axis T, relative to the base part 38 about a longitudinal axis L (indicated in Fig. 1) of the cantilever unit 20. The rotary mechanism 22 may further include a rotation angle sensor 23 (schematically indicated in Fig. 1) associated with the rotary mechanism 22 to output information regarding a rotation angle of the rotary mechanism 22, the support arm part 36, and thus a gearbox 40 about the longitudinal axis L.

The support arm part 36 includes the gearbox 40 (schematically indicated in Fig. 2) for the cutting drum 18. The gearbox 40 includes a gear set (not shown in further detail) for transmitting the driving force from a drive unit 41 accommodated in the base part 38 to the rotatable cutting drum 18 and to the rotatable tool holders 32. Said gear set accommodated in the gearbox 40 may include, for example, a reduction gear unit including spur and bevel gears.

The cantilever unit 20 is connected to the machine base frame 12 by the tilt device 24 and the pivotal device 26. The tilt device 24 is configured to tilt (pivot) the cantilever unit 20 relative to the machine base frame 12 upwards and downwards about a tilt axis K (see Fig. 1). The pivotal device 26 is configured to pivot the cantilever unit 20 relative to the machine base frame 12 sideward (horizontally, from left to right and vice versa) about a pivot axis S (see Fig. 2). The pivot axis S and the tilt axis K extend substantially perpendicular to each other.

Specifically, the tilt device 24 includes a tilt console 39 which pivotally connects the cantilever unit 20, particularly the base part 38, and a base plate 42 via, for example, a pivot pin. The base plate 42 is mounted to the slide carriage unit 16. The tilt device 24 further includes a pair of actuators 44, for example hydraulic cylinders with movable pistons, mounted between the base plate 42 and lateral sides of the cantilever unit 20, particularly the base part 38. A retraction of the actuators 44 pivots (tilts) the cantilever unit 20 downwards about the tilt axis K, whereas an extension of the actuators 44 pivots the cantilever unit 20 upwards about the tilt axis K. Additionally, the tilt device 24 may include a tilt angle sensor (inclinometer sensor) 25 (schematically indicated in Fig. 2) associated with the tilt device 24 to output information regarding a tilt angle of the cantilever unit 20 about the tilt axis K. For example, in some embodiments, the tilt angle sensor 25 may be associated with the actuator 44.

The pivotal device 26 includes a pivot mechanism 46 mounted between the base plate 42 and the slide carriage unit 16. The pivot mechanism 46 allows a relative rotation between the base plate 42 and the slide carriage unit 16 about the pivot axis S. The pivotal device 26 further includes a pair of actuators 48, for example hydraulic cylinders with movable pistons, mounted between lateral sides of the base plate 42 and the slide carriage unit 16. A retraction of the left actuator 48 and an extension of the right actuator 48 (referring to the top view of Fig. 2) pivots the base plate 42 together with the cantilever unit 20 to the left about the pivot axis S. Similarly, a retraction of the right actuator 48 and an extension of the left actuator 48 (referring to the top view of Fig. 2) pivots the base plate 42 together with the cantilever unit 20 to the right about the pivot axis S.

In some embodiments, the mobile mining machine 10 may be configured in accordance with the mobile mining machine disclosed in WO 2014/026761 A2 of Caterpillar Global Mining Europe GmbH. Accordingly, WO 2014/026761 A2 is incorporated herein in its entirety, and with specific reference to the configuration of the mobile mining machine, and the method for driving tunnels, galleries or shafts into hard rock or the like as disclosed in WO 2014/026761 A2.

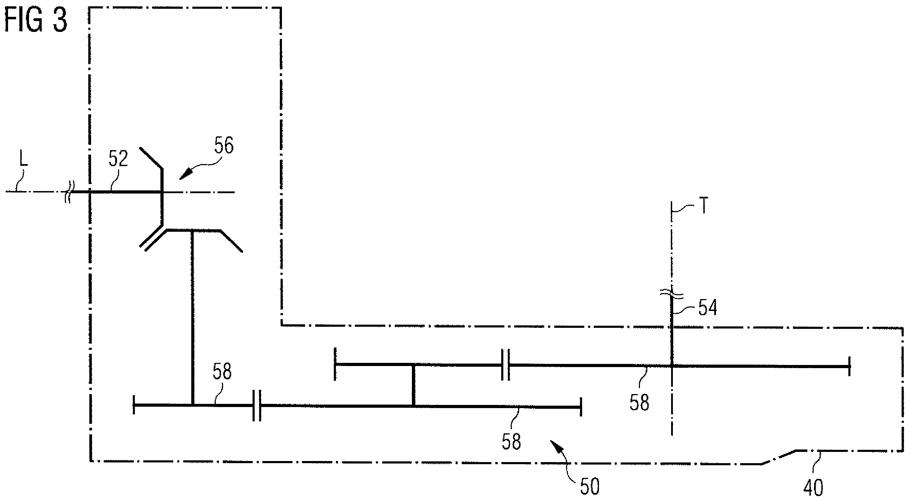

Turning to Fig. 3, an exemplary configuration of the gearbox 40 is depicted. The gearbox 40 includes a gearing 50 connecting an input shaft 52 to an output shaft 54. The input shaft 52 is connected to the drive unit 41 (see Fig. 1). The output shaft 54 is connected to the cutting drum 18 (see Fig. 1) for rotating the same about the drum axis T, and for rotating the excavating tools 28 about respective axes H. For example, the gearing 50 may include a pair of bevel gears 56, and a plurality of spur gears 58 forming a reduction gear unit. For lubricating the gearing 50 in the gearbox 40, a lubricant is contained in the gearbox 40. For preventing leakage of lubricant from the gearbox 40 due to an increased temperature of the lubricant, and thus an increased volume of the lubricant, during operation, the gearbox 40 may be only partly filled with lubricant.

As explained herein, the mobile mining machine 10 is capable of rotating the support arm part 36 including the gearbox 40 about the longitudinal axis L via the rotary mechanism 22. Additionally, the cantilever unit 20 including the gearbox 40 is pivotable (tiltable) about the tilt axis K via the tilt device 24. As a result, the gearbox 40 is rotated about the longitudinal axis L in case the rotary mechanism 22 is actuated, and the gearbox 40 is pivoted upwards and downwards in case the tilt device 24 is actuated. The present disclosure considers that circumstances with a view to a cooling circuit for the lubricant in the gearbox 40 as explained in greater detail hereinbelow.

The present disclosure suggests to selectively pump lubricant from a first lubricant outlet of the gearbox 40 through the cooling circuit, and to selectively pump lubricant from a second lubricant outlet, which is spaced apart from the first lubricant outlet, through the cooling circuit. Particularly, lubricant is pumped from that lubricant outlet, which is immersed in lubricant at that time during operation. Thus, it is prevented that a pump of the cooling circuit tries to pump lubricant from a lubricant outlet, which is not immersed in oil, which would result in air entering the cooling circuit. Air entering the cooling circuit is undesirable, because it may lead to a deteriorated flow or stall of lubricant so that cooling of the lubricant cannot be effected as desired.

In the following, two exemplary cooling circuit designs allowing to selectively pump lubricant from a first lubricant outlet and a second lubricant outlet using flow adjustment members are discussed. One skilled in the art will appreciate that individual features or groups of features (such as arrangement of pumps and valves etc.) of the two embodiments may be combined in further embodiments

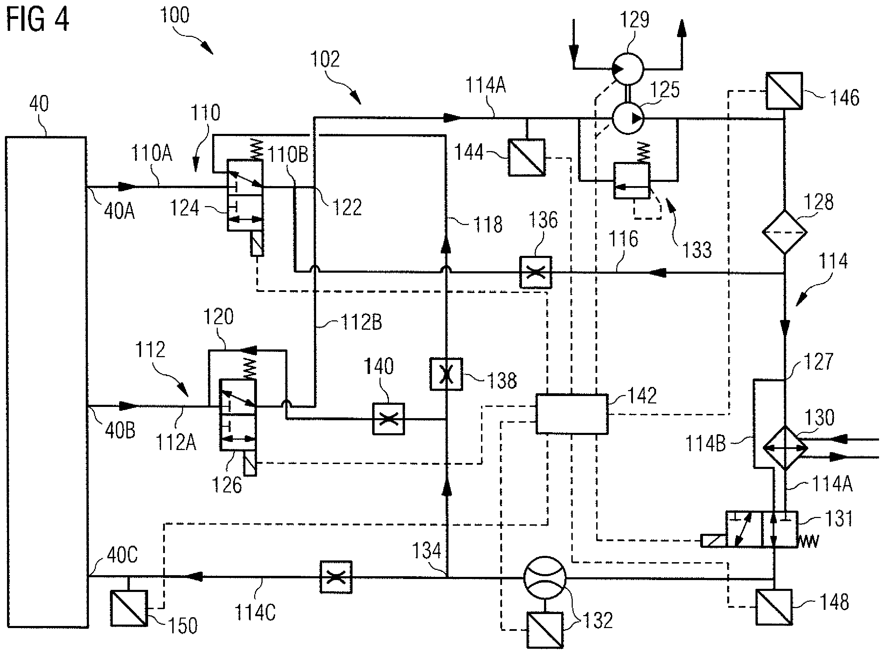

Referring to Fig. 4, a first exemplary transmission assembly 100 is shown. The first transmission assembly 100 includes the gearbox 40, and a cooling circuit 102 for cooling lubricant from the gearbox 40 and returning the cooled lubricant to the gearbox 40.

The gearbox 40 includes a first lubricant outlet 40A and a second lubricant outlet 40B for providing lubricant to the cooling circuit 102. The second lubricant outlet 40B is arranged spaced apart from the first lubricant outlet 40A, particularly along a direction of the longitudinal axis L of the cantilever unit 20 (see Figs. 1 to 3), and/or along a direction perpendicular to the longitudinal axis L. The first lubricant outlet 40A of the gearbox 40 serves as a first lubricant inlet for the cooling circuit 102, and the second lubricant outlet 40B of the gearbox 40 serves as a second lubricant inlet for the cooling circuit 102. The gearbox 40 further includes a lubricant inlet 40C for receiving the lubricant from the cooling circuit 102. The lubricant inlet 40C of the gearbox 40 serves as a lubricant outlet for the cooling circuit 102.

The cooling circuit 102 includes a first lubricant line 110, a second lubricant line 112, and a third lubricant line 114. The cooling circuit 102 further includes a first lubricant return line 116, a second lubricant return line 118, and a third lubricant return line 120.

The first lubricant line 110 extends between the first lubricant outlet 40A and a first junction 122. The second lubricant line 112 is provided parallel to the first lubricant line 110. The second lubricant line 112 extends between the second lubricant outlet 40B and the first junction 122. A first three-way two-position valve (example for a first flow adjusting member) 124 is installed in the first lubricant line 110 to separate a first section 110A of the first lubricant line 110 from a second section 110B of the first lubricant line 110. Similarly, a second three-way two-position valve (example for a first flow adjusting member) 126 is installed in the second lubricant line 112 to separate the same into a first section 112A and a second section 112B. In other embodiments, the first valve and/or the second valve may have other configurations.

In a first position (as shown in Fig. 4), the first three-way two-position valve 124 fluidly connects the second lubricant return line 118 to the second section 110B of the first lubricant line 110, and blocks a flow between the first and second sections 110A and 110B of the first lubricant line 110 (in other words, fluidly isolates the first and second sections 110A and 110B). In a second position, the first three-way two-position valve 124 blocks the flow between the second lubricant return line 118 and the second section 110B of the first lubricant line 110, and fluidly connects the first and second sections 110A and 110B of the first lubricant line 110.

Similarly, in a first position (as shown in Fig. 4) the second three-way two-position valve 126 fluidly connects the third return line 120 to the second section 112B of the second lubricant line 112, whereas a flow between the first and second sections 112A and 112B of the second lubricant line 112 is blocked. Additionally, in a second position, the second three-way two-position valve 126 blocks a flow between the third return line 120 and the second section 112B of the second lubricant line 112, and fluidly connects the first and second sections 112A and 112B of the second lubricant line 112.

The third lubricant line 114 extends between the first junction 122 and the lubricant inlet 40C of the gearbox 40. A lubricant pump 125 is installed in the third lubricant line 114 to pump lubricant through the cooling circuit 102. For example, as shown in Fig. 4, the lubricant pump 125 may be driven by a hydraulic motor 129. Additionally, a filter element 128 for filtering the passing lubricant and a heat exchanger 130 for cooling the passing lubricant are installed in the third lubricant line 114. The heat exchanger 130 is used as a cooler for cooling the lubricant. Moreover, a pressure reducing valve 133 may be provided parallel to the lubricant pump 125 in a line connected to upstream and downstream of the lubricant pump 125.

A third three-way two-position valve 131 is installed in the third lubricant line 114. Specifically, in a first position as shown in Fig. 4, the third three-way two-position valve 131 fluidly connects a second section 114B of the third lubricant line 114, which branches off a first section 114A of the third lubricant line 114, to a third section 114C extending to the lubricant inlet 40C of the gearbox 40. At the same time, the third three-way two-position above 130 fluidly isolates the first section 114A and the third section 114C. The heat exchanger 130 is installed in the first section 114A of the third lubricant line 114 downstream of a junction 127, at which the second section 114B branches off the first section 114A. The lubricant is not cooled by the heat exchanger 130 when the third three-way two-position valve 131 is in the first position. In a second position, the third three-way two-position valve 131 fluidly connects the first and third sections 114A, 114C of the third lubricant line 114, whereas a flow between the second and third sections 114A, 114C is blocked. The lubricant is cooled by the heat exchanger 130 when the third three-way two-position valve 131 is in the second position.

The third lubricant line 114 further includes a volume flow measuring device 132 installed downstream of the third three-way two-position valve 131 and a third junction 134 at which the second and third return lines 118, 120 branch off the third lubricant line 114, particularly the third section 114C thereof.

The first lubricant return line 116 branches off the first section 114A of the third lubricant line 114 downstream of the filter element 128 and upstream of the heat exchanger 130 and the third three-way two-position valve 131. The first lubricant return line 116 recirculates filtered lubricant from downstream of the lubricant pump 125 to upstream of the lubricant pump 125. Specifically, the first lubricant return line 116 opens into the second section 110B of the first lubricant line 110. The first lubricant return line 116 ensures that the first section 114A of the third lubricant line 114 upstream of the lubricant pump 125 is filled with lubricant to ensure that the lubricant pump 125 is operable (does not suck air). For limiting a lubricant flow through the first lubricant return line 116, a first orifice 136 is installed in the first lubricant return line 116. For example, the first orifice 136 may limit a (volumetric) flow through the first lubricant return line 116 to about one twentieth of a (volumetric) flow through the first, second and third sections 114A-114C of the third lubricant line 114. In some embodiments, the first lubricant return line 116 may additionally or alternatively open into the first section 110A of the first lubricant line 110 and/or the first section 112A of the second lubricant line 112.

The second and third lubricant return lines 118, 120 branch off the third section 114C of the third lubricant line 114 at the junction 134. The second and third lubricant return lines 118, 120 include respective orifices 138 and 140 for limiting the flow therethrough, for example to a flow about one tenth of a flow through the third section 114C of the third lubricant line 114. In some embodiments, the second and third lubricant return lines 118, 120 may share a common orifice 138 provided upstream of the junction between the second lubricant return line 118 and the third lubricant return line 120.

The cooling circuit 102 further includes a control unit 142. The control unit 142 is communicatively connected to the first three-way two-position valve 124, the second three-way two-position valve 126, and the third three-way two-position valve 131 to control operation thereof (setting the respective valve into the first position or the second position). The control unit 142 is also communicatively connected to the lubricant pump 125 and the motor 129 to control their operation. Furthermore, the control unit 142 is communicatively connected to a plurality of sensors for receiving data therefrom, some of which are shown in Fig. 4.

The control unit 142 is communicatively connected to a first pressure sensor 144, a first temperature sensor 146, a second temperature sensor 148, the volume flow measuring device 132, and a second pressure sensor 150.

The control unit 142 monitors an input pressure into the lubricant pump 125 via the first pressure sensor 144. For example, if the first pressure sensor 144 indicates a too low pressure although the lubricant pump 125 is controlled as desired, the control unit 142 may shut down the lubricant pump 125 for emergency reasons. The control unit 142 monitors a lubricant temperature via the first temperature sensor 146, for example, to regulate operation of the heat exchanger 130. The control unit 142 further monitors a lubricant temperature via the second temperature sensor 148, for example, to check whether the heat exchanger 130 operates as desired. Additionally, for example, in case the temperature of the lubricant is lower than desired, the control unit 142 may control the third three-way two-position about 132 to bypass the heat exchanger 130. The control unit 142 further monitors the volumetric flow through the third lubricant line 114 via the volume flow measuring device 132, and a pressure of the lubricant before entering the gearbox 40 through the lubricant inlet 40C via the second pressure sensor 150.

Additionally, the control unit 142 may be communicatively connected to the tilt sensor 25 for receiving data indicating a tilt angle about the tilt axis K, the rotation sensor 23 for receiving data indicating a rotation angle or circumferential position of the gearbox 40 about the longitudinal axis L, and/or the orientation sensor 17 for receiving data indicating an orientation of the mobile mining machine 10 (see Figs. 1 and 2). Based on information from the tilt sensor 25, the rotation sensor 23, the orientation sensor 17, and/or other sensor(s) providing information associated with a height position or orientation of the gearbox 40 during operation, the control unit 142 determines which of the first lubricant outlet 40A and the second lubricant outlet 40B is at a lower height position above the ground. The lubricant outlet 40A or 40B being lower to the ground is considered to be immersed in lubricant so that pumping lubricant from that outlet 40A or 40B into the cooling circuit 102 is possible. Thus, for example, a possibility of air entering the lubricant pump 125 may be reduced to minimize or prevent aeration from occurring in the cooling circuit 102.

The control unit 142 controls the first three-way two-position valve 124 to operate in the first position and the second three-way two-position valve 126 to operate in the second position in case the second lubricant outlet 40B is determined to be at a lower height position than the first lubricant outlet 40A. Similarly, the control unit 142 controls the first three-way two-position valve 124 to operate in the second position and the second three-way two-position valve 126 to operate in the first position in case the first lubricant outlet 40A is determined to be at a lower height position than the second lubricant outlet 40B.

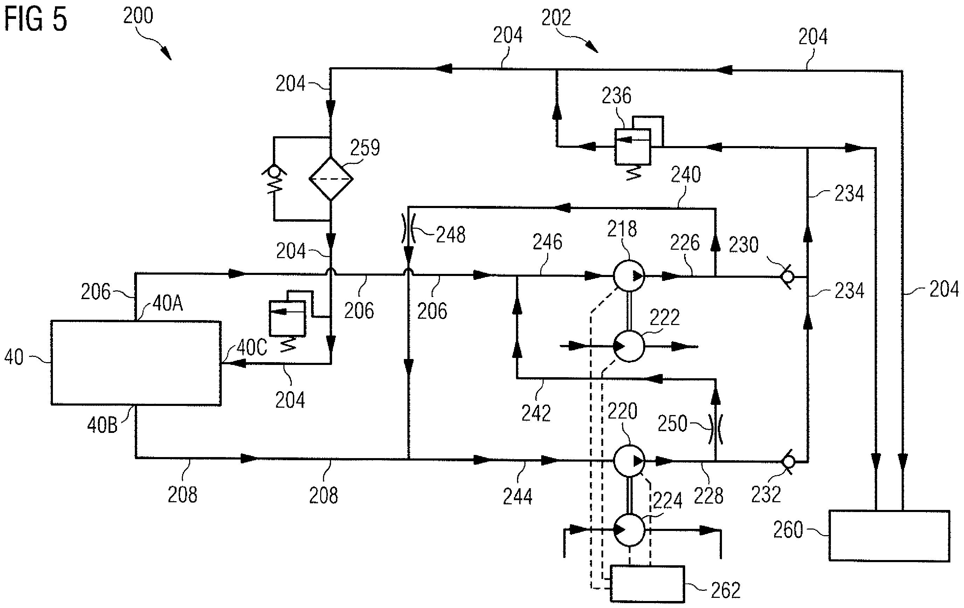

Referring to Fig. 5, a second exemplary transmission assembly 200 is shown. The second transmission assembly 200 includes the gearbox 40, and a cooling circuit 202 for cooling lubricant from the gearbox 40 and returning the lubricant to the gearbox 40.

Similar to the embodiment shown in Fig. 4, the gearbox 40 includes the first lubricant outlet 40A, the second lubricant outlet 40B, and the lubricant inlet 40C.

The cooling circuit 202 includes a first lubricant line (first gearbox outlet line) 206, a second lubricant line (second gearbox outlet line) 208, and a third lubricant line (gearbox inlet line) 204. The first lubricant line 206 and the second lubricant line 208 are disposed in parallel relation, and are configured to supply lubricant to the cooling circuit 202. The third lubricant line 204 is configured to supply lubricant to the gearbox 40 from the cooling circuit 202.

The cooling system 216 includes a pair of lubricant pumps, for example gear pumps, namely a first lubricant pump (example for a first flow adjusting member) 218 and a second lubricant pump (example for a second flow adjusting member) 220. The first lubricant pump 218 is installed in the first lubricant line 206. The second lubricant pump 220 is installed in the second lubricant line 208. Each of the first and second lubricant pumps 218, 220 is configured to pump lubricant from the gearbox 40. For example, the lubricant pumps 218 and 220 may be driven by hydraulic motors 222 and 224, respectively, as shown in Fig. 5 or any other applicable drive mechanism. An outlet 226 of the first lubricant pump 218 and an outlet 228 of the second lubricant pump 220 are disposed in fluid communication with a first check valve 230 and a second check valve 232, respectively.

In some embodiments, the first and second lubricant pumps 218, 220 may be fixed displacement pumps and the first and second hydraulic motors 222, 224 may be fixed displacement motors. However, in other embodiments, persons skilled in the art may contemplate incorporating variable displacement pumps and motors in lieu of respective ones or all of the fixed displacement pumps and motors disclosed herein depending on specific requirements of an application (the same applies to the lubricant pump 125 and the motor 129 as discussed with reference to the embodiment shown in Fig. 4).

The cooling circuit 202 further includes a main output line 234 located downstream of the first and second check valves 230, 232 and disposed in selective fluid communication with each of the first and second lubricant lines 206, 208. The first and second check valves 230, 232 are configured to allow a unidirectional flow of lubricant from respective ones of the first and second outlet lines 206, 208 to the main output line 234.

Furthermore, the cooling circuit 202 also includes a pilot controlled relief valve 236 configured to selectively communicate lubricant from the main output line 234 to the third lubricant line 204 associated with the gearbox 40. For example, the relief valve 236 may be of a type that works on a spring-operated pilot relief setting. The relief valve 236 may be set to open at a pre-determined pressure value depending on specific requirements of an application.

The cooling circuit 202 further includes a pair of intermediary fluid lines, namely a first intermediary lubricant line 240 and a second intermediary lubricant line 242. The first intermediary lubricant line 240 is configured to fluidly communicate lubricant from the outlet 226 of the first lubricant pump 218 to an inlet 244 of the second lubricant pump 220. The second intermediary lubricant line 242 is configured to fluidly communicate lubricant from the outlet 228 of the second lubricant pump 220 to an inlet 246 of the first lubricant pump 218. Additionally, a first orifice 248 is disposed in the first intermediary lubricant line 240, and a second orifice 250 is disposed in the second intermediary lubricant line 242. The first and second orifices 248, 250 are configured to regulate a mass flow rate of the lubricant being pumped into the first and second intermediary lubricant lines 240, 242 by respective ones of the first and second lubricant pumps 218, 220.

The cooling circuit 202 further includes a heat exchanger 260 for cooling the lubricant and a filter element 259 for cleaning the lubricant. The heat exchanger 216 is disposed downstream of the first and second lubricant pumps 218 and 220, and the main output line 234. The filter element 259 is provided downstream of the heat exchanger 260 in the third lubricant line 204.

A control unit 262 is communicatively connected to the first lubricant pump 218, the first hydraulic motor 222, the second lubricant pump 220, and the second hydraulic motor 224. The control unit 262 controls the pumps 218, 220 and the associated motors 222 and 224 to selectively pump lubricant from that outlet 40A or 40B, which is determined as being lower to the ground at that time by the control unit 262, for example, based on data received from the tilt sensor 25, the rotation sensor 23, and/or the orientation sensor 17 (see Figs. 1 and 2). For example, in case the control unit 262 determines that the first lubricant outlet 40A is closer to the ground than the second lubricant outlet 40B, the control unit 262 controls the first lubricant pump 218 and the first motor 222 to operate for pumping lubricant from the first lubricant outlet 40A. At the same time, the control unit 262 deactivates the second lubricant pump 218 and the second motor 224, because there is a risk that the second lubricant outlet 40B may be not immersed in lubricant, and thus, air may enter the second lubricant line 208.

For keeping the lubricant lines 206 and 208 upstream of the lubricant pumps 218 and 220, respectively, filled with lubricant even in case the associated lubricant pump 218 or 220 is deactivated, lubricant is provided to those lubricant lines 206 and 208 via the intermediary lubricant lines 240 and 242. For example, if the first lubricant pump 218 is deactivated, lubricant from the outlet 228 of the second lubricant pump 220 is routed through the second intermediary lubricant line 242 to the first lubricant line 206. When the first lubricant pump 218 is restarted later on, the lubricant line 206 is filled with lubricant instead of air so that the first lubricant pump 218 can be operated as desired. Likewise, in another example, if the second lubricant pump 220 is deactivated, lubricant from the outlet 226 of the first lubricant pump 218 is routed through the first intermediary lubricant line 240 to the second lubricant line 208. Thus, a possibility of air entering the first or second lubricant pumps 218, 220 may be reduced to minimize or prevent aeration from occurring in the first and second lubricant pumps 218 and 220.

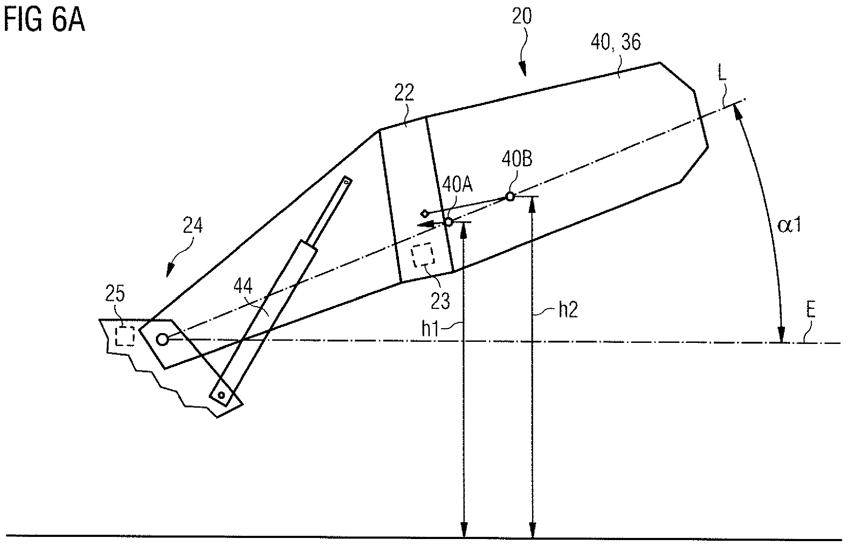

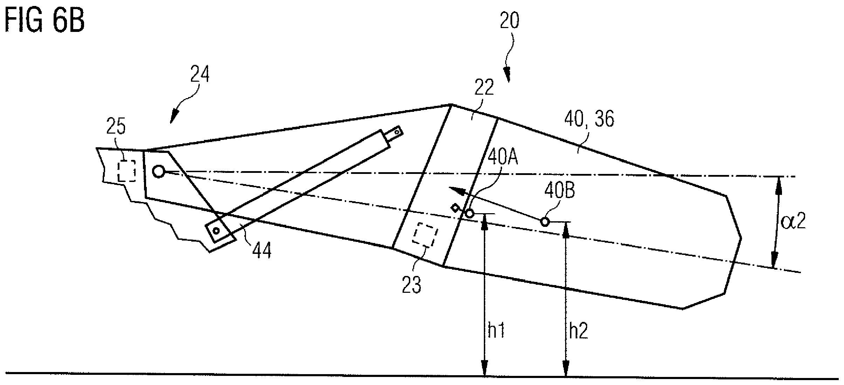

Referring to Figs. 6A and 6B showing a first schematic application example, in which the cantilever unit 20 is tilted (pivoted) at different angles α1 and α2.

Specifically, the tilt angles α1 and α2 are defined between a horizontal line E and the longitudinal axis L of the cantilever unit 20. The tilt angles α1 and α2 may be measured by the tilt angle sensor 25. In the shown example, the tilt angle α1 is greater than the tilt angle α2, which has a negative value. The control unit of the cooling circuit receives data from the tilt angle sensor 25. Based on that data, the control unit determines for the example shown in Fig. 6A that a height h1 of the first lubricant outlet 40A is lower than a height h2 of the second lubricant outlet 40B. The control unit further determines that the first lubricant outlet 40A is immersed in lubricant, whereas the second lubricant outlet 40B might be not immersed in lubricant, but exposed to air within the gearbox 40. The control unit controls the cooling circuit to pump lubricant from the first lubricant outlet 40A only to prevent aeration of the cooling circuit through the second lubricant outlet 40B. For example, with reference to the embodiment shown in Fig. 4, the lubricant pump 125 may be activated, the first valve 124 may be moved into the second position, and the second valve 126 may be moved into the first position. As another example, with reference to the embodiment shown in Fig. 5, the first lubricant pump 218 may be activated, and the second lubricant pump 220 may be deactivated.

For the example shown in Fig. 6B, the control unit determines based on tilt angle α2 (and known geometries of the mobile mining machine 10) that a height h2 of the second lubricant outlet 40B is lower than a height h1 of the first lubricant outlet 40A. As a result, the control unit controls the cooling circuit to pump lubricant only through the second lubricant outlet 40B.

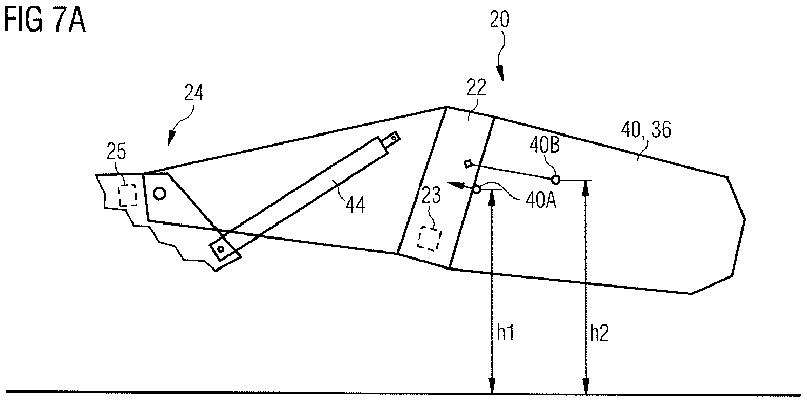

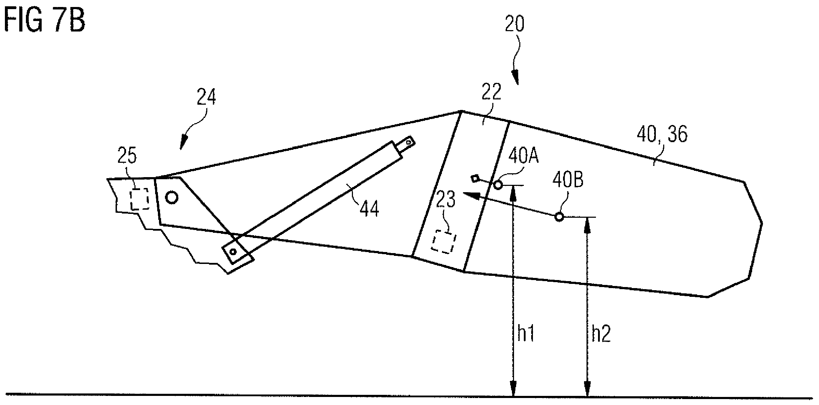

Referring to Figs. 7A and 7B, a second schematic application example is shown, in which the rotary mechanism 22 of the cantilever unit 20 is rotated about 180° between the situation shown in Fig 7A and 7A.

In the situation shown in Fig. 7A, the control unit of the cooling circuit determines based on measurements received from rotation angle sensor 23 that a height h1 of the first lubricant outlet 40A is lower than a height h2 of the second lubricant outlet 40B. The control unit thus controls the cooling circuit to pump lubricant only from the first lubricant outlet 40A, which is considered to be immersed in lubricant. In contrast, in the situation shown in Fig. 7B, a height h1 of the first lubricant outlet 40A is greater than a height h2 of the second lubricant outlet 40B, because the support arm part 36 and thus the gearbox 40 has been rotated about 180° by the rotary mechanism 22 relative to the situation shown in Fig. 7A. Here, the control unit control the cooling circuit to pump lubricant only from the second lubricant outlet 40B.

### Industrial Applicability

The transmission assembly as disclosed herein is applicable in mining machines, particularly mobile mining machines, for transmitting the drive force of a drive unit to the cutting drum. The gearbox and the cooling circuit as disclosed herein are particularly suitable for mining machines including mechanisms for tilting the cutting drum upwards and downwards, and/or for rotating the cutting drum about a longitudinal axis of a support arm supporting the cutting drum.

In a related aspect, the present disclosure further relates to a method for cooling the gearbox 40 described in the following under reference to Figs. 4 and 5. The method comprises providing the first lubricant outlet 40A and the second lubricant outlet 40B at the gearbox 40 for connection to a cooling circuit 102, 202. The second lubricant outlet 40B is spaced apart from the first lubricant outlet 40A. The method further comprises determining which of the first lubricant outlet 40A and the second lubricant outlet 40B has a lower height above a ground below the mining machine 10. Then, lubricant is pumped through the cooling circuit 102, 202 only from that lubricant outlet of the first lubricant outlet 40A and the second lubricant outlet 40B, which has the lower height above the ground.

Terms such as "about", "around", "approximately", or "substantially" as used herein when referring to a measurable value such as a parameter, an amount, a temporal duration, and the like, is meant to encompass variations of ±10% or less, preferably ±5% or less, more preferably ±1% or less, and still more preferably ±0.1% or less of and from the specified value, insofar as such variations are appropriate to perform in the disclosed invention. It is to be understood that the value to which the modifier "about" refers is itself also specifically, and preferably, disclosed.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

Although the preferred embodiments of this invention have been described herein, improvements and modifications may be incorporated without departing from the scope of the following claims.

## Claims

1. A transmission assembly (100; 200) for a mobile mining machine (10) including a cutting drum (18), the transmission assembly (100; 200) comprising:
a gearbox (40) for connecting to the cutting drum (18), the gearbox (40) including a lubricant inlet (40C), a first lubricant outlet (40A), and a second lubricant outlet (40B) provided spaced apart from the first lubricant outlet (40A); and
a cooling circuit (102; 202) fluidly connecting the first lubricant outlet (40A) and the second lubricant outlet (40B) to the lubricant inlet (40C), the cooling circuit (102; 202) being configured to:
selectively pump lubricant from the first lubricant outlet (40A) to the lubricant inlet (40C) through the cooling circuit (102; 202), and
selectively pump lubricant from the second lubricant outlet (40B) to the lubricant inlet (40C) through the cooling circuit (102; 202).

2. The transmission assembly (100; 200) of claim 1, further comprising:
a control unit (142; 262) configured to:
receive first data associated with a first height (h1) of the first lubricant outlet (40A) above a ground and second data associated with a second height (h2) of the second lubricant outlet (40B) above the ground,
control the cooling circuit (102; 202) to pump lubricant from the first lubricant outlet (40A) if the first and second data indicate that the second height (h2) is higher than the first height (h1), and
control the cooling circuit (102; 202) to pump lubricant from the second lubricant outlet (40B) if the first and second data indicate that the first height (h1) is higher than the second height (h2).

3. The transmission assembly (100; 200) of claim 2, wherein the first data and/or the second data include information indicating at least one of a tilt angle of a cantilever unit (20) of the mobile mining machine (10), a rotation angle of a rotary mechanism (22) of the cantilever unit (20), and an orientation of the mobile mining machine (10).

4. The transmission assembly (100; 200) of any one of the preceding claims, wherein the cooling circuit (102; 104) further comprises:
a first lubricant line (110; 206) extending from the first lubricant outlet (40A), the first lubricant line (110; 206) including a first flow adjusting member (124; 218) configured to selectively allow or block a lubricant flow through the first lubricant line (110; 206).
a second lubricant line (112; 208) extending from the second lubricant outlet (40B) and joining the first lubricant line (110; 206) downstream of the first flow adjusting member (124; 218), the second lubricant line (112; 208) including a second flow adjusting member (126; 220) configured to selectively allow or block a lubricant flow through the second lubricant line (112; 206).

5. The transmission assembly (100) of claim 4, wherein:
the first flow adjusting member is a first valve (124), particularly a three-way two-position valve;
the second flow adjusting member is a second valve (126), particularly a a three-way two-position valve; and
a lubricant pump (125) is connected downstream of the first valve (124) and the second valve (126).

6. The transmission assembly (100) of claim 5, wherein:
in a first position of the first valve (124), the first valve (124) blocks a flow through the first lubricant line (110), and, in a second position of the first valve (124), the first valve (124) allows a flow through the first lubricant line (110), and
in a first position of the second valve (126), the second valve (126) blocks a flow through the second lubricant line (112), and, in a second position of the second valve (126), the second valve (126) allows a flow through the second lubricant line (112).

7. The transmission assembly (100) of claim 6, wherein:
in the first position of the first valve (124), the first valve (124) allows a flow from a first lubricant return line (118) into the first lubricant line (110); and
in the first position of the second valve (126), the second valve (126) allows a flow from a second lubricant return line (120) into the second lubricant line (112).

8. The transmission assembly (200) of claim 4, wherein the first flow adjusting member is a first lubricant pump (218) and the second flow adjusting member is a second lubricant pump (220).

9. The transmission assembly (200) of claim 8, further comprising:
a first intermediary lubricant line (240) fluidly connecting an outlet (226) of the first lubricant pump (218) to the second lubricant line (208) upstream of the second lubricant pump (220), and
a second intermediary lubricant line (242) fluidly connecting an outlet (228) of the second lubricant pump (220) to the first lubricant line (206) upstream of the first lubricant pump (218).

10. The transmission assembly (100; 200) of any one of the preceding claims, wherein the cooling circuit (102; 202) further comprises at least one of a heat exchanger (130; 260) and a filter element (128; 259).

11. A mobile mining machine (10) for underground mining, including:
a cutting drum (18), and
the transmission assembly (100; 200) according to any one of the preceding claims, the transmission assembly (100; 200) being operatively coupled to the cutting drum (18).

12. The mobile mining machine (10) of claim 11, further comprising:
a cantilever unit (20) including a base part (38) and a front support arm part (36) on which the cutting drum (18) is rotatably mounted, the front support arm part (36) including the transmission assembly (100; 200);
a tilt device (24) configured to tilt the cantilever unit (20) upwards and downwards;
a tilt angle sensor (25) configured to measure a tilt angle of the cantilever unit (20), the tilt angle sensor (25) being communicatively connected to the control unit (142; 262).

13. The mobile mining machine (10) of claim 11 or 12, further comprising:
a cantilever unit (20) including a base part (38) and a front support arm part (36) on which the cutting drum (18) is rotatably mounted, the front support arm part (36) including the transmission assembly (100; 200);
a rotary mechanism (22) configured to rotate the front support arm part (36) relative to the base part (38) about a longitudinal axis (L) of the cantilever unit (20); and
a rotation angle sensor (23) configured to measure a rotation angle of the rotary mechanism (22), the rotation angle sensor (23) being communicatively connected to the control unit (142; 262).

14. The mobile mining machine (10) of any one of claims 11 to 13; further comprising an orientation sensor (17) configured to measure an orientation of the mobile mining machine (10), the orientation sensor (17) being communicatively connected to the control unit (142; 262).

15. A method for cooling a gearbox (40) for a cutting drum (18) of a mining machine (10), the method comprising:
providing a first lubricant outlet (40A) and a second lubricant outlet (40B) at the gearbox (40), the second lubricant outlet (40B) being spaced apart from the first lubricant outlet (40A);
determining which of the first lubricant outlet (40A) and the second lubricant outlet (40B) has a lower height above a ground below the mining machine (10); and
pumping lubricant through a cooling circuit (102; 202) only from that lubricant outlet of the first lubricant outlet (40A) and the second lubricant outlet (40B), which has the lower height above the ground.
